# EUROPEAN PATENT APPLICATION

(11) **EP 2 336 022 A2**
(43) Date of publication of application: **22.06.2011**
(21) Application number: 10192299.5
(22) Date of filing: 23.11.2010
(51) Int. Cl.: B64C 11/00, B64C 39/02

(54) **Morphing ducted fan for vertical take-off and landing vehicle**

(30) Priority: 21.12.2009 US 643839
(71) Applicant: Honeywell International Inc., Morristown, NJ 07962 (US)
(72) Inventor: Goossen, Emray, Morristown, NJ 07962-2245 (US); Cox, Paul Alan, Morristown, NJ 07962-2245 (US); O'Brien, Patrick, Morristown, NJ 07962-2245 (US)
(74) Representative: Buckley, Guy Julian

(57) **Abstract**

A morphing duct of a ducted fan for a vertical take-off and landing (VTOL) vehicle is configured to change shape as function of the flight mode of the vehicle to improve the thrust per unit energy input for the ducted fan. Additionally, the morphing duct may be configured to change shape to change the flight path of the VTOL vehicle.

## Description

### TECHNICAL FIELD

The disclosure relates to ducted fans employed in various types of aircraft including vertical take-off and landing vehicles.

### BACKGROUND

Vertical take-off and landing (VTOL) vehicles are often used in providing reconnaissance, among other functions, and allow access to areas that may not be feasible with conventional aircraft. In particular, ducted fan VTOL vehicles are known for superior stationary aerodynamic hovering performance and low speed flights. Ducted fans employ a duct surrounding a fan rotor in order to, *inter alia,* increase the performance of the ducted fan by increasing the amount of thrust the fan produces per unit power applied to run the fan.

### SUMMARY

In general, the disclosure describes a ducted fan for an aerial vehicle (e.g., a VTOL vehicle) that comprises a duct that is configured to change shape as function of the flight mode of the vehicle and techniques for changing the shape of the ducted fan.

In one example, a ducted fan for a vertical take-off and landing vehicle includes a rotor fan and an annular duct. The annular duct surrounds the fan and includes an inlet section and an outlet section on opposing sides of the fan. At least one of the inlet section or the outlet section is configured to change shape as a function of a mode of operation of the VTOL.

In another example, a VTOL vehicle includes an engine, and at least one ducted fan including a rotor fan and an annular duct. The rotor fan is operatively connected to the engine. The annular duct surrounds the fan and includes an inlet section and an outlet section on opposing sides of the fan. At least one of the inlet section or the outlet section is configured to change shape as a function of a mode of operation of the VTOL.

In another example, a method includes determining a flight mode of a VTOL vehicle to which a ducted fan is operatively connected, determining a shape for at least one of an inlet section or an outlet section of a duct of the ducted fan as a function of the flight mode, and changing the at least one of the inlet section or the outlet section of the duct of the ducted fan to the shape.

In another aspect, the disclosure is directed to a computer-readable storage medium comprising instructions. The instructions cause a programmable processor to perform any part of the techniques described herein. The instructions may be, for example, software instructions, such as those used to define a software or computer program. The computer-readable medium may be a computer-readable storage medium such as a storage device (e.g., a disk drive, or an optical drive), memory (e.g., a Flash memory, random access memory or RAM) or any other type of volatile or non-volatile memory that stores instructions (e.g., in the form of a computer program or other executable) to cause a programmable processor to perform the techniques described herein.

The details of one or more examples are set forth in the accompanying drawings and the description below. Other features, objects, and advantages of the disclosed examples will be apparent from the description and drawings, and from the claims.

### BRIEF DESCRIPTION OF DRAWINGS

FIG. 1 perspective view of a double-ducted VTOL vehicle including an example morphing duct ducted fan.

FIG. 2 is schematic illustration of a morphing duct ducted fan of the VTOL vehicle of FIG. 1.

FIG. 3 illustrates a number of example shapes for a morphing duct ducted fan.

FIG. 4 is a chart of the engine power versus ducted fan inlet shape in two different flight modes.

FIGS. 5A-5E are schematic illustrations of different actuators configured to change the shape of a morphing duct ducted fan as function of flight mode.

FIG. 6 is a schematic illustration of a morphing and vectoring duct ducted fan.

FIG. 7 is a flow chart illustrating an example method of operating a morphing duct ducted fan in different flight modes.

FIG. 8 is schematic illustration of another example morphing duct ducted fan.

### DETAILED DESCRIPTION

Some types of aerial vehicles include a ducted fan, which employs a duct surrounding a fan rotor for various reasons, such as to increase the performance of the ducted fan by increasing the amount of thrust the fan produces per unit power applied to run the fan. An aerial vehicle can include one or more ducted fans. Duct performance can change depending upon the operating mode of the vehicle in which the duct is used. As a result, the optimum operating characteristics of ducts in ducted fans vary greatly depending on the operating mode of the vehicle. For example, the optimum aerodynamic shape of a duct for a ducted fan VTOL is substantially different while the vehicle operates in a hover mode than while the vehicle operates in a cruise flight mode. If, for example, a duct inlet is designed for efficient hover, the duct can exhibit relatively high drag in forward flight, which can affect the thrust, power and fuel consumption required to attain a particular vehicle speed. On the other hand, if the duct inlet is configured to improve vehicle efficiency during forward flight, the vehicle may exhibit a loss of thrust in a hover mode. Similarly, a duct outlet, which may also be referred to as a duct diffuser, may be designed to spread airflow in hover mode to reduce velocity and increase pressure for maximum lift. Alternatively, the duct outlet may be configured to contract airflow in forward flight to increase velocity and reduce pressure.

Existing ducts for ducted fan VTOLs are static or one dimensionally modified and are typically designed with shapes that are optimized for only one of the operating modes, or, alternatively, configured to optimize neither the hover mode nor the cruise flight mode, thereby resulting in a configuration that could compromise performance in both modes. A ducted fan described herein includes a dynamically changing duct shape, which permits the duct shape to change to accommodate different operating modes (e.g., a cruise mode or a hover mode). For example, in some examples, a duct of a ducted fan has a shape in a cruise flight mode that provides a more rapid contraction of air drawn through the duct relative to the hover flight mode. In general, the duct shape in the forward flight mode can be selected to reduce drag, and the duct shape in the hover flight mode can be selected to allow a smooth airflow into the duct to increase the efficiency of static thrust.

The actively changeable shape of the ducted fan permits the aerial vehicle to accommodate different flight missions. The shape of the duct of the ducted fan described herein can be dynamically changed during the mission of the air vehicle during flight without requiring replacement of the duct. In this way, the shape of the duct of the ducted fan does not have to be selected at the time of manufacture of the aerial vehicle, but may nevertheless provide flight mode efficiency for particular flight segments.

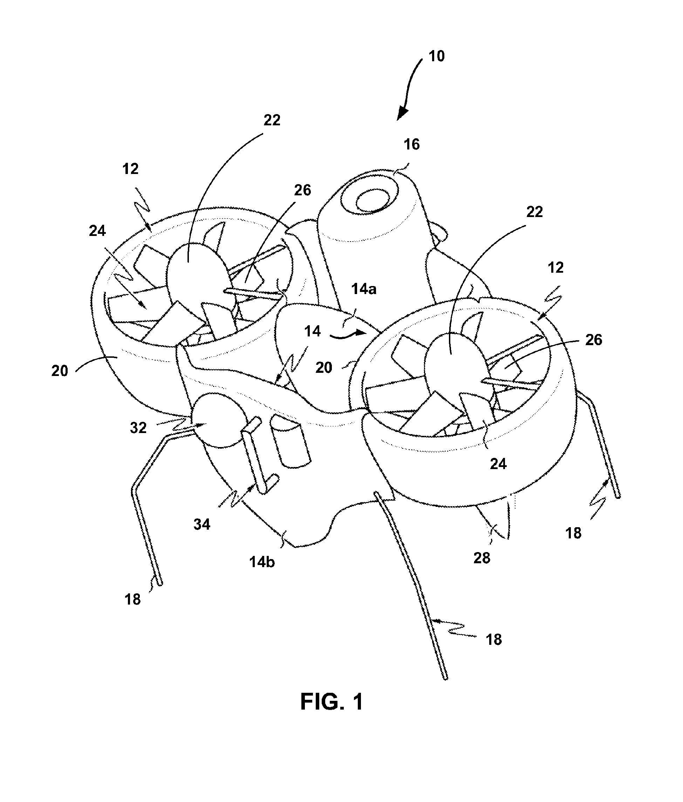

FIG. 1 is a perspective view of an example double-ducted vertical take-off and landing (VTOL) vehicle 10 including two ducted fans 12, pods 14, engine 16, and landing gear 18. In FIG. 1, pods 14 and engine 16 are located between ducted fans 12 and mechanically coupled (either directly or indirectly) to ducted fans 12. Pods 14 may be, e.g., avionics and/or payload pods. For example, pod 14a may be configured to transport a person or another payload for covert deployment of personnel or extraction of injured personnel from rough terrain or a hostile environment. As another example, pod 14a can comprise sensors, fuel, or objects to be dropped or placed by VTOL vehicle 10. Pod 14b, on the other hand, may be configured to carry avionics (e.g., to communicating to and from VTOL vehicle 10), as well as avionics for navigating VTOL vehicle 10. Pods 14a, 14b can also be switched, such that pod 14b includes a payload and pod 14a includes avionics.

In the example shown in FIG. 1, two landing gears 18 are connected to a respective one of pod 14b and engine 16. Other example VTOL vehicles may include fewer or more landing gear 18, which may be connected to different components of the vehicle than shown in the example of FIG. 1. Engine 16 is operatively connected to and configured to drive ducted fans 12. In other examples, each of duct fans 12 is powered by a separate engine. In the example shown in FIG. 1, engine 16 is a gas turbine engine. However, other example VTOL vehicles may include other types of engines including, e.g., a reciprocating engine or electric motor. Engine 16 may be operatively connected to ducted fans 12 via an energy transfer apparatus including, e.g., a differential. In other examples, each of ducted fan assemblies 12 can be powered by a respective engine.

Although VTOL vehicle 10 is depicted in FIG. 1 as a double ducted VTOL vehicle having two ducted fans 12, the number of ducted fans may vary in other example VTOL vehicles. In one example, a VTOL vehicle includes three or more ducted fans 12. Various other features may also vary in other embodiments. In examples including an even number of ducted fans 12, each of the fans may be aligned side-by-side along a lateral plane. In other examples, a VTOL vehicle, such as a micro-air vehicle (MAV), includes a single ducted fan 12.

Referring again to FIG. 1, each of ducted fans 12 includes duct 20, nose cone 22, rotor fan 24, stator 26, and tail cone 28. Nose cone 22, rotor fan 24, stator 26, and tail cone 28 are arranged axially in the direction of flow through ducted fan 12 from a leading to a trailing edge of the fan. In operation, rotor fan 24 rotates to draw a working medium gas including, e.g., air, into nose cone 22 and capture the gas between nose cone 22 and the inlet of duct 20. The working medium gas is drawn through rotor fan 24, directed by stator 26 and accelerated out of the outlet of duct 20 around tail cone 28. The acceleration of the working medium gas through duct 20 propels ducted fan 12. In this manner, engine 16 drives ducted fans 12 to propel VTOL vehicle 10 in flight.

In the example of FIG. 1, VTOL vehicle 10 also includes one or more sensors 32 and a capture bar 34. Sensors 32 are attached to pod 14b, and are configured to sense objects and/or other conditions surrounding VTOL vehicle 10 and to facilitate operation thereof. For example, sensors 32 may sense the attitude and air speed of ducts 12 and vehicle 10, as well as ambient air pressure and temperature. Sensors 32 can have other positions relative to the components of VTOL vehicle 10. For example, sensors 32 can be pressure sensors that are coupled to a distributed around a lip of one or both of the ducts 20. Capture bar 34 is attached to, coupled to, or formed integral with pod 14b, and is configured to assist with capture of VTOL vehicle 10, for example by being engaged by a non-depicted capture device. In the depicted embodiment, capture bar 34 protrudes out from pod 14b. However, in other examples, capture bar 34 may be implemented as a pocket or other recess in pod 14b.

Ducts 20 of ducted fans 12 may be employed to increase the performance of the ducted fans by increasing the amount of thrust the fan produces per unit power applied by engine 16 to run the fan. The thrust produced by each of ducted fans 12 is directly proportional to the contraction ratio of the working medium gas passing through the fan. An unducted rotor fan generally has a contraction ratio on the order of one-half (½). Adding duct 20, however, can change the contraction ratio of ducted fan 12 to approximately 1, which, in turn, increases the thrust per unit power of the fan. In order to further improve the performance of ducted fans 12, and thereby VTOL vehicle 10, each fan 12 includes a morphing duct 20 that is configured to change shape as a function of the flight mode of VTOL vehicle 10. Changing the shape of duct 20 during a flight of vehicle 10 dynamically changes the contraction ratio of duct 20 to, for example, accommodate the different flight modes of vehicle 10. The contraction ratio of ducted fan 12 that improves performance (e.g., in terms of fuel efficiency, vehicle endurance, or otherwise) of vehicle 10 can change depending upon the flight mode of vehicle 10. Additionally, in some embodiments, morphing duct 20 is configured to change shape to change the flight path of VTOL vehicle 10.

Ducts 20 of ducted fans 12 can each be formed of any suitable material including, e.g., various composites, aluminum or other metals, a semi rigid foam, various elastomers or polymers, aeroelastic materials, or even wood.

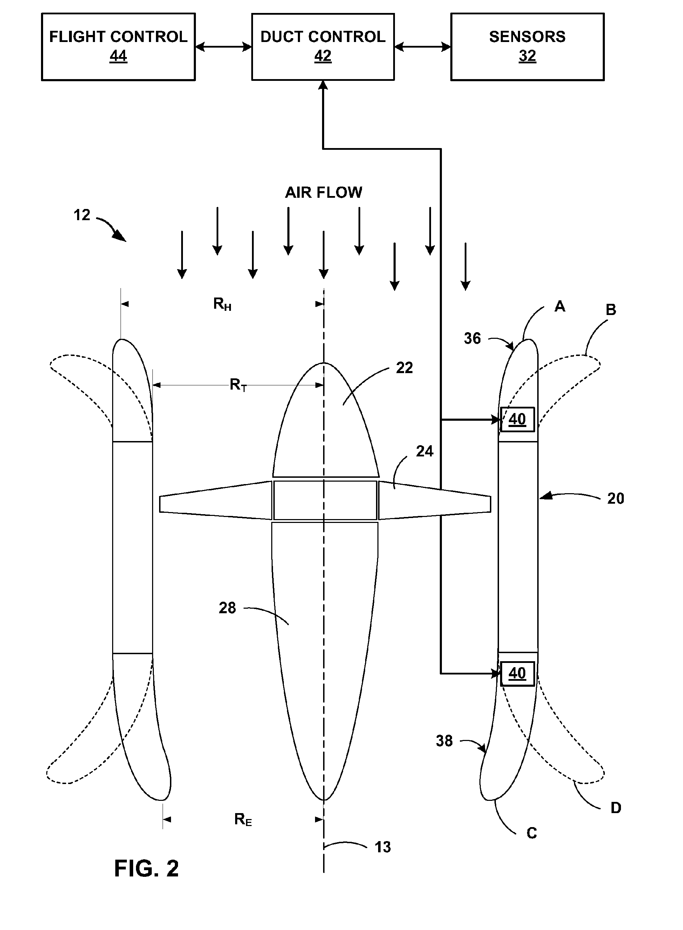

FIG. 2 is a schematic illustration of one of the ducted fans 12 of VTOL vehicle 10. In the example shown in FIG. 2, ducted fan 12 includes morphing duct 20, nose cone 22, rotor fan 24, and tail cone 28. For simplicity, stator 26 has been omitted from FIG. 2. The components of ducted fan 12 are arranged about central axis 13, about which rotor fan 24 rotates during operation of fan 12. The shape of inlet 36 of morphing duct 20 is defined, at least in part, as a function of a throat radius, R_{T}, and a highlight radius, R_{H}. Throat radius, R_{T}, is the minimum radius of duct 20 from leading to trailing edge. Highlight radius, R_{H}, is the radius of duct inlet 36 at the forward most of the duct, i.e., the leading edge. The contraction ratio of inlet section 36 may be defined as the ratio of the area defined by the highlight radius, R_{H}, to the area defined by the throat radius, R_{T}, of duct 20. Similarly, the contraction ratio of outlet section 38 may be defined as the ratio of the area defined by the outlet exit radius, R_{E}, to the area defined by the throat radius, R_{T}, of duct 20. As illustrated in FIG. 2, the outlet exit radius, R_{E}, is the radius of outlet section at the aftward most point of duct 20, i.e., the trailing edge.

Morphing duct 20 includes inlet section 36 arranged toward and including the leading edge of duct 20. Morphing duct 20 also includes outlet section 38 arranged toward and including the trailing edge of duct 20. Each of inlet and outlet sections 36, 38 includes annuli that are configured to change shape as a function of the flight mode of the vehicle to which ducted fan 12 is connected, e.g. VTOL vehicle 10 of FIG. 1. Inlet section 36 and outlet section 38 may change shape together or alone, as well as in conjunction with or independent of one another. The shape of inlet and outlet sections 36, 38 of morphing duct 20 is mechanically changed by at least one actuator 40, which may be arranged, e.g., within a hollow space of one or both of the sections 36, 38 or within the material from which the sections are formed. As described in greater detail below, each actuator 40 may be one or more of a pneumatic, an electrical, a thermal, a magnetic, a mechanical, an electromechanical, a piezoelectric, or another appropriate actuator that is configured to be activated or otherwise triggered to change the shape of one or both of inlet and outlet sections 36, 38 as a function of the flight mode of a VTOL vehicle.

In the example of FIG. 2, the operation of actuators 40 is controlled by duct control 42. Duct control 42 receives input from a number of sources in order to properly control actuators 40 to actively morph the shape of duct 20 as a function of the flight mode of the vehicle to which ducted fan 12 is attached, e.g. VTOL vehicle 10 of FIG. 1. In this way, a shape of duct 20 is configured to by dynamically adjusted, e.g., in order to dynamically change a contraction ratio. In the example of FIG. 2, duct control 42 is communicatively connected to flight control 44 of, e.g., vehicle 10 and to sensors 32. In this manner, duct control 42 may receive signals indicative of the flight mode of vehicle 10 and the ambient conditions under which the vehicle is operating, which are further indicative of the flight mode of vehicle 10. For example, duct control 42 may receive signals from flight control 44 and/or sensors 32 indicative of the attitude and flight speed of vehicle 10 and ducted fan 12, as well as ambient air pressure and temperature.

The functions attributed to duct control 42 and flight control 44 may be implemented, at least in part, by hardware, software, firmware or any combination thereof. For example, various aspects of the techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components, embodied in an avionics system of vehicle 10 or embodied as part of actuators 40. The term "processor" or "processing circuitry" may generally refer to any of the foregoing logic circuitry, alone or in combination with other logic circuitry, or any other equivalent circuitry.

Such hardware, software, firmware may be implemented within the same device or within separate devices to support the various operations and functions described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components, or integrated within common or separate hardware or software components.

When implemented in software, the functionality ascribed to duct control 42 and flight control 44 may be embodied as instructions on a computer-readable medium such as random access memory (RAM), read-only memory (ROM), non-volatile random access memory (NVRAM), electrically erasable programmable read-only memory (EEPROM), FLASH memory, magnetic data storage media, optical data storage media, or the like. The instructions may be executed to support one or more aspects of the functionality described in this disclosure.

As previously indicated, duct control 42 controls actuators 40 in order to change the shape of inlet and outlet sections 36, 38 of ducts 20. FIG. 2 illustrates the operation of ducted fan 12 to change the shape of morphing duct 20 as function of flight mode. In particular, FIG. 2 illustrates first and second shapes of each of inlet and outlet sections 36, 38. In FIG. 2, inlet section 36 is shown in first and second shapes A, B, respectively. Similarly, outlet section 38 is illustrated in first and second shapes C, D, respectively. In operation, duct control 42 receives input from flight control 44 and/or sensors 32 indicative of the flight mode and conditions of ducted fan 12. In one example, duct control 42 receives input from flight control 44 and/or sensors 32 indicative of the attitude of ducted fan 12. Based on the attitude of ducted fan 12 indicated by the vehicle electronics, e.g. flight control 44 and/or sensors 32, duct control 42 determines whether ducted fan 12 is in a hover or cruise flight mode. In a hover flight mode, vehicle 10 generally maintains vertical flight, e.g., to maintain a relatively stable position and remain nearly stationary in flight. In a cruise flight mode, vehicle 10 has a forward (or rearward) flight path component. In some examples, vehicle 10 comprises a mach number greater than 0.1 during the cruise flight mode.

In one example, signals from flight control 44 and/or sensors 32 indicate that the attitude of ducted fan 12 indicates a hover flight mode, e.g., during a vertical take-off of the ducted fan. Based on the flight mode of ducted fan 12 determined by duct control 42 from signals from flight control 44 and/or sensors 32, duct control 42 triggers actuators 40 to change the shape of at least one of inlet section 36 or outlet section 38. Duct control 42 can control actuator 40 to change the shape of inlet section 36 from a first shape to a second shape, although other intermediary shapes may also be possible. Similarly, duct control 42 can control actuator 40 to change the shape of outlet section 38 from a first shape to a second shape, although other intermediary shapes may also be possible. In the example shown in FIG. 2, duct control 42 triggers actuators 40 to morph inlet section 36 into shape B and outlet section 38 into shape D during a hover flight mode. The converging-diverging shape of duct 20 with inlet section 36 in shape B and outlet section 38 in shape D improves performance for the low air speed and high pressure conditions of the hover flight mode of vehicle 10. Additionally, the converging, high contraction ratio shape B of inlet section 36 decreases boundary layer separation of the working medium gas flowing through duct 20, which in turn increases the efficiency and performance of ducted fan 12 during a hover flight mode of vehicle 10.

After operating in hover flight mode, e.g., for a vertical take-off, ducted fan 12 can transition to a cruise flight mode. In such examples, duct control 42 may receive signals from flight control 44 and/or sensors 32 that signal that the attitude of ducted fan 12 indicates cruise flight mode. Based on the flight mode of ducted fan 12 determined by duct control 42 from signals from flight control 44 and/or sensors 32, duct control 42 triggers actuators 40 to change the shape of at least one of inlet section 36 or outlet section 38. In the example of FIG. 2, duct control 42 activates (or otherwise triggers) actuators 40 to morph inlet section 36 into shape A and/or outlet section 38 into shape C. Shape A selected for inlet section 36 for use in the cruise flight mode helps balance boundary layer and drag concerns. Shape A of inlet section 36 of duct 20 can reduce drag and improve performance of vehicle 10 during the cruise flight mode of vehicle 10. Shape C of outlet section 38 selected for the cruise flight mode maintains some convergence in order to accelerate the air flow and improve propulsion performance during cruise flight mode.

The contraction ratio of shape A used in a cruise flight mode is significantly smaller than Shape B that is used in a hover flight mode in order to reduce drag on duct 20 during the cruise flight mode. Shape A is a converging, lower contraction ratio nozzle shape appropriate for the higher flight speeds under which ducted fan 12 operates in the cruise mode. Shape A of inlet section 36 of duct 20 can improve the cruising efficiency of vehicle 10 during the cruise flight mode of vehicle 10.

In general, improving the hover or cruising efficiency of vehicle 10 by dynamically changing the shape of duct 20 may help reduce the weight of vehicle 10 for a particular flight mission by requiring the vehicle to carry less fuel for a particular flight mission. For example, with a morphing duct that has an inlet section 36 that changes from shape B to shape A in a cruise flight mode, the fuel savings may be up to 38% or more for a 1859.73 kilogram (about 4100 pounds) aerial vehicle cruising at about 250 knots on at an altitude of about 6.1 kilometers (about 20,000 feet) on a 570 nautical mile mission.

The particular shapes that inlet section 36 and outlet section 38 of morphing duct 20 acquire may vary depending on the vehicle to which ducted fan 12 is connected, the particular characteristics and conditions under which the vehicle is expected to operate, as well as the different possible flight modes for the vehicle. In some examples, the shapes of inlet section 36 and outlet section 38 in each of a plurality of flight modes are predetermined and stored by duct control 42. Alternatively, actuator 40 can be configured to change the shape of inlet section 36 from a first predetermined shape and a second predetermined shape, and actuator 40 can be configured to change the shape of outlet section 38 from a first predetermined shape and a second predetermined shape. As a result, when duct control 42 activates or otherwise triggers actuators 40, actuators 40 automatically change the shape of inlet and/or outlet sections 36, 38 to the predetermined configurations, without further instructions from duct control 42 as to which shape is desired.

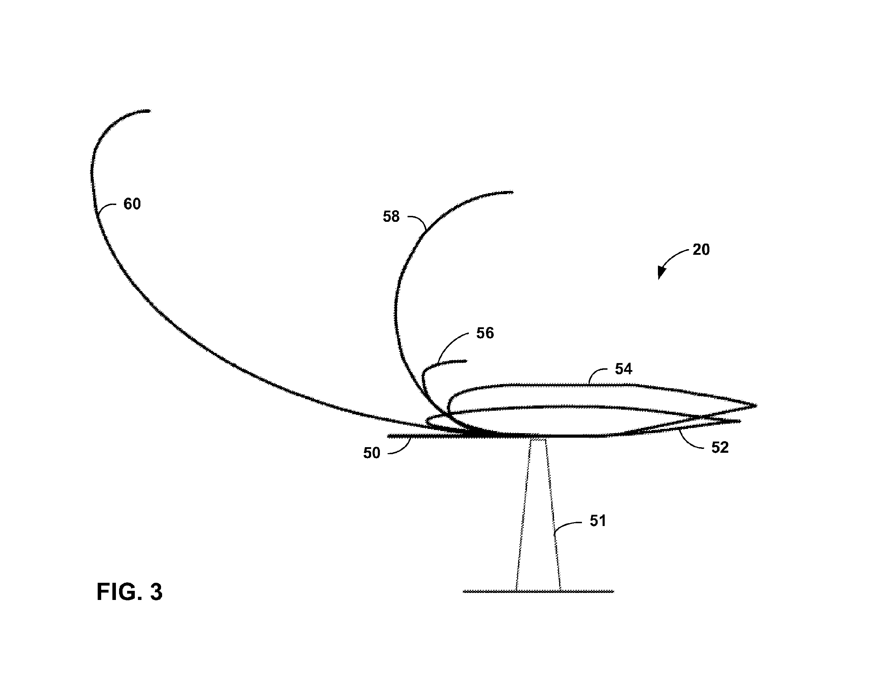

FIG. 3 illustrates a number of possible shapes inlet section 36 of morphing duct 20 (partially shown in FIG. 3), where the shapes can be selected based on a flight mode of ducted fan 12. As a reference, shape 50 represents a plane end straight duct inlet with a contraction ratio equal to 1. In addition, rotor fan 51 is shown in FIG. 3 to indicate the relative orientation of the partial morphing duct 20 shown in FIG. 3. Shapes 52 and 54 illustrate to airfoil type inlet shapes including an arcuate leading edge that has a converging profile at inlet section 36 of duct 20. The contraction ratio of shape 54 is greater than that of shape 52. Shape 56 illustrates a more blunt, converging arcuate shape for inlet section 36 with a contraction ratio that is higher than both shapes 52 and 54. Finally, shapes 58 and 60 illustrate bell mouth shapes for inlet section 36, which increase a contraction ratio of the working medium gas passing through fan 12. Shape 58 is an example simple radius bell mouth. Shape 60 is an example elliptical bell mouth.

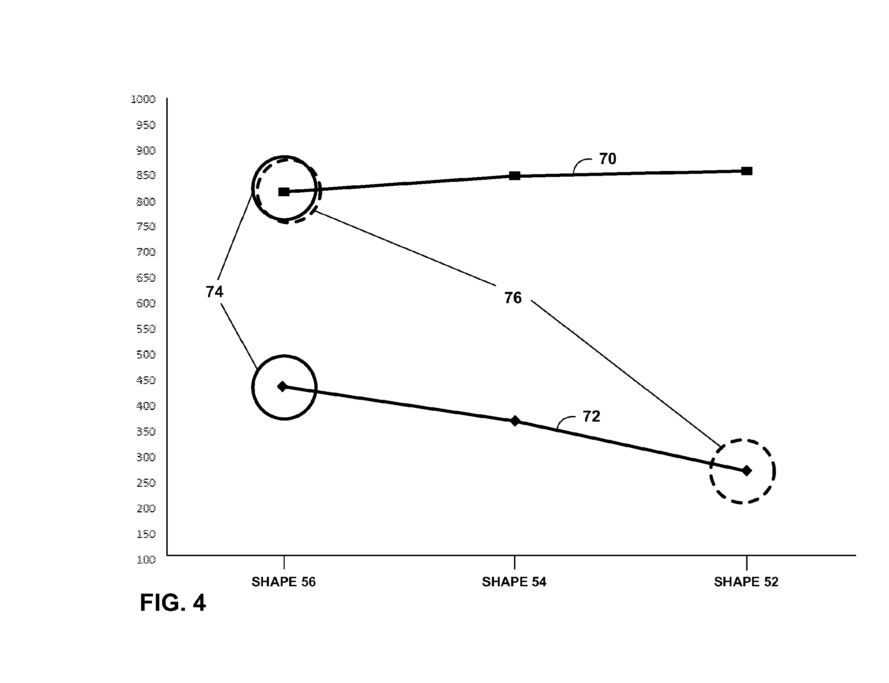

The operation of ducted fans having several of the inlet section shapes illustrated in FIG. 3 were simulated for a hover flight mode and a cruise flight mode. The simulation suggests that changing a shape of inlet section 36 depending on whether duct 20 is in a hover flight mode or a cruise flight mode results in performance gains of duct 20. That is, the simulation suggests that if the inlet section 36 has different shapes in the flight and cruise modes, the performance of duct 20 improves. The results of the simulation are illustrated in the chart of FIG. 4.

The different inlet section 36 shapes into which the duct of a ducted fan changes as a function of flight mode are shown along the horizontal axis of the chart of FIG. 4. In particular, shapes 52, 54, and 56 of FIG. 3 were used in the simulation. The power of the engine driving the ducted fan in horsepower (HP) is shown along the vertical axis of the chart of FIG. 4. Curve 70 shows the performance of inlet shapes 52, 54, and 56 in a hover flight mode. Curve 72 shows the performance of inlet shapes 52, 54, and 56 in a cruise flight mode. Solid line circles 74 represent the performance of a conventional ducted fan with static duct inlet having a relatively straight configuration in the hover and cruise flight modes. In the example of FIG. 4, the example conventional static duct ducted fan has a duct inlet with converging arcuate shape 56 of FIG. 3. Dashed line circles 76 represent the performance of a ducted fan with an example morphing duct that changes shapes between the hover and cruise flight modes. In FIG. 4, the example morphing duct ducted fan has a duct inlet that changes from converging arcuate shape 56 of FIG. 3 in the hover flight mode to airfoil shape 52 in the cruise mode.

Because the conventional static duct ducted fan represented by solid line circles 74 is designed with an inlet shape more advantageous for hover than cruise, there is not a significant performance difference between the conventional static duct ducted fan and the example morphing duct ducted fan represented by dashed line circles 76 in the hover flight mode. However, because morphing duct 76 is configured to change inlet shape as a function of flight mode, the example morphing duct ducted fan of FIG. 4 is able to produce the same thrust as the conventional static duct ducted fan from a significantly lower amount of engine power. The performance increase shown in FIG. 4 represents approximately a 38% engine power reduction per unit thrust from the conventional static duct ducted fan to the morphing duct ducted fan. Thus, the example morphing duct ducted fan of FIG. 4 provides an improved energy efficiency.

Although FIG. 4 illustrates performance gains from inlet shape changes, changing the shape of the duct outlet of a ducted fan as a function of flight mode will also increase performance of the ducted fan in a manner similar to that described above with reference to the inlet of ducted fan 12. Additionally, changing the duct inlet and out shape as a function of flight mode, e.g. as described above for ducted fan 12 with reference to FIG. 2, will produce a cumulative performance increase attributable to the optimized shapes of both the inlet and the outlet of the duct.

Referring again to FIG. 2, generally speaking, duct control 42 receive signals from flight control 44 and/or sensors 32 that indicate the flight mode of ducted fan 12. Based on the flight mode of ducted fan 12, duct control 42 triggers actuators 40 to change the shape of at least one of inlet section 36 or outlet section 38. As described above, each actuator 40 may be, e.g., a pneumatic, electrical, thermal, magnetic, mechanical, electromechanical, or piezoelectric actuator that is configured to be triggered to change the shape of one or both of inlet and outlet sections 36, 38 as a function of the flight mode of a VTOL vehicle.

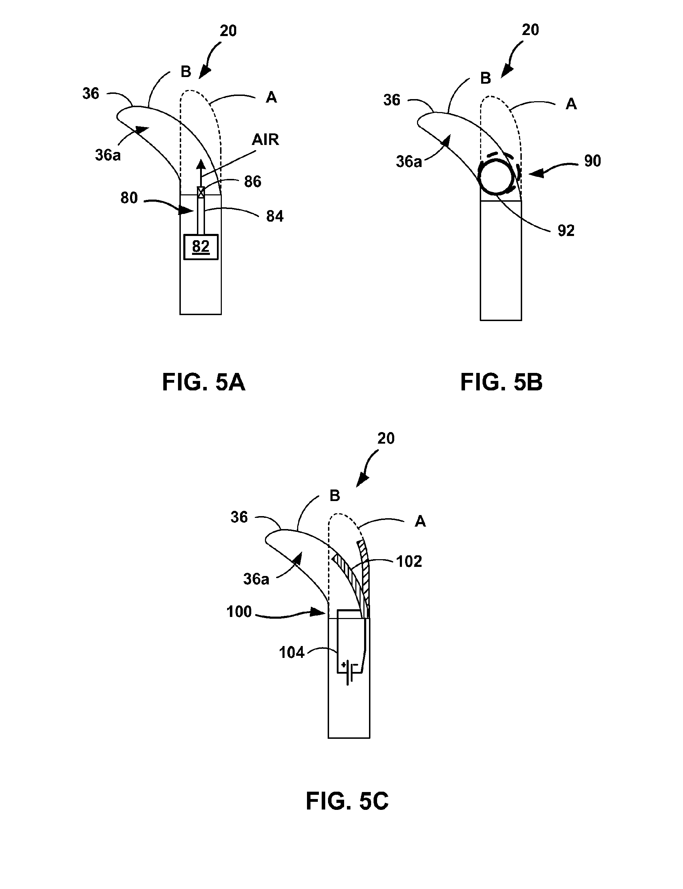

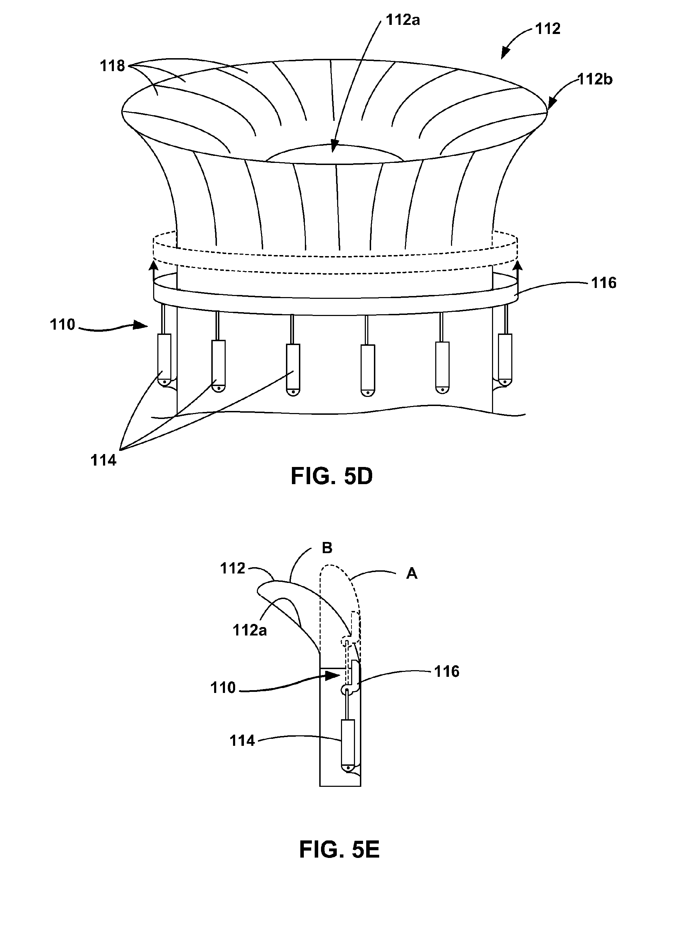

FIGS. 5A-5E are schematic illustrations of different example actuator mechanisms that are configured to change the shape of one or both of inlet and outlet sections 36, 38. For the sake of simplicity, only inlet section 36 is depicted in FIGS 5A-5E. However, the techniques described with respect to inlet section 36 may similarly be applied to outlet section 38. FIGS. 5A and 5B are schematic illustrations of two example pneumatic actuators. FIG. 5C is a schematic illustration of an example piezoelectric actuator. Finally, FIGS. 5D and 5E are schematic illustrations of example mechanical actuators.

FIG. 5A is a schematic illustration of pneumatic actuator 80 including air supply 82, conduit 84, and valve 86. In the example of FIG. 5A, inlet section 36 of duct 20 of ducted fan 12 is formed from a resilient material that is biased into the larger contraction ratio second shape B as described above with reference to FIG. 2. Inlet section 36 may, for example, be formed of a resilient metal, an elastomer, or another material that is capable of elastic deformation between first and second shapes, e.g. shapes A and B, as illustrated in FIG. 5A.

Actuator 80 is configured to supply pressurized air into cavity 36a within inlet section 36. In the example of FIG. 5A, conduit 84 is connected to air supply 82 through which actuator 80 supplies air under pressure into cavity 36a. As cavity 36a of inlet section 36 fills with pressurized air, the strain from the air pressure deforms inlet section 36 from second shape B into first shape A. Conversely, in some examples, actuator 80 includes check valve 86 to exhaust the pressurized air from cavity 36a of inlet section 36 to change the shape of the inlet back from first shape A to second shape B. Duct 20 can be formed of a material that is stiff enough to maintain its shape in an unpressurized condition during operation of aerial vehicle 10. Although air supply 82 is shown in FIG. 5A as arranged within duct 20, in other examples the air supply for actuator 80 may be located in other locations with respect to duct. For example, air supply 82 may be compressor bleed air drawn from a compressor stage in gas turbine engine 16 of the VTOL vehicle 10 of FIG. 1.

In other examples, inlet section 36 of duct 20 of ducted fan 12 is formed from a resilient material that is biased into the first shape A, and the strain generated in duct 20 from the introduction of pressurized air into cavity 36a of inlet section 36 by pneumatic actuator 80 causes inlet section 36 to acquire second shape B.

FIG. 5B is a schematic illustration of another pneumatic actuator 90. As with the example of FIG. 5A, in the example of FIG. 5B, inlet section 36 of duct 20 of ducted fan 12 is also formed from a resilient material that is biased into the larger contraction ratio second shape B as described above with reference to FIG. 2. Inlet section 36 may, for example, be formed of a resilient metal, an elastomer, or another material that is capable of elastic deformation between first and second shapes, e.g. shapes A and B, as illustrated in FIG. 5B. Actuator 90 includes an expandable bladder 92 arranged within cavity 36a of inlet section 36. Duct control 42 controls actuator 90 to supply pressurized air into the bladder 92 to expand bladder 92. As bladder 92 fills with pressurized air and expands, inlet section 36 is deformed from second shape B into first shape A. Conversely, as the pressurized air is exhausted from bladder 92 of actuator 90, e.g. via a valve, inlet section 36 changes shape back from first shape A to second shape B. In one example, the pressurized air that fills and expands bladder 92 may be compressor bleed air drawn from a compressor stage in gas turbine engine 16 of the VTOL vehicle 10 of FIG. 1.

In addition to the examples of FIGS. 5A and 5B, another pneumatic actuator arrangement may include supplying pressurized air into cavity 36a of inlet section 36 to expand the entire inlet section from a first shape to a second shape.

FIG. 5C is a schematic illustration of example piezoelectric actuator 100. Piezoelectric actuator 100 is an example of a general category of actuators appropriate for use in examples in accordance with this disclosure commonly referred to as smart materials. Generally speaking, smart materials are materials that have properties that can be controlled by external stimuli including, e.g., stress, temperature, moisture, pH, or electric or magnetic fields. Example smart materials that may also be employed in the examples disclosed herein include piezoelectric, piezoceramic, shape memory alloys and polymers, pH-sensitive allows, and photomechanical materials.

In FIG. 5C, piezoelectric actuator 100 includes piezoelectric member 102 and power supply 104. Again, inlet section 36 may be formed of a resilient material including, e.g., a resilient metal, an elastomer, or another material that is capable of elastic deformation between first and second shapes, e.g. shapes A and B as illustrated in FIG. 5C. Piezoelectric member 102 of actuator 100 is connected to a surface (e.g., an internal surface, although an external surface is possible) of cavity 36a of inlet section 36 and to power supply 104, e.g. a battery housed in duct 20 or another location on a VTOL vehicle to which the duct is connected.

Piezoelectric member 102 is configured to change shape in response to the application of, e.g. a voltage across the member by power supply 104. As power supply places a voltage across piezoelectric member 102 in the example of FIG. 5C, a mechanical stress is produced that straightens member 102, which, in turn, changes the shape of inlet section 36 from second shape B into first shape A. Conversely, removing the voltage from power supply 104 across piezoelectric member 102 acts to remove the stress produced thereby to cause inlet section 36 to change shape back from first shape A to second shape B.

Power supply 104 can apply the voltage across piezoelectric member 102 under the control of duct control 42. Duct control 42 controls power supply 104 to apply a voltage across piezoelectric member 102 based on the flight mode of VTOL vehicle 10. For example, in the example shown in FIG. 5C, upon detecting a cruise mode, duct control 42 controls power supply 104 to apply a voltage across piezoelectric member 102, thereby changing the shape of inlet section 36 to shape A, which optimizes performance of duct 20 in the cruise mode relative to a configuration in which inlet section 36 has shape B. Upon detecting a flight hover mode, duct control 42 controls power supply 104 to remove the voltage across piezoelectric member 102, thereby changing the shape of inlet section 36 back to shape B, which improves performance of duct 20 in the hover mode relative to a configuration in which inlet section 36 has shape A.

FIG. 5D is a schematic illustration of an example mechanical actuator assembly 110 connected to a duct inlet 112 of a ducted fan, which can be an example of ducted fan 20 of VTOL vehicle 10 (FIG. 1). Actuator assembly 110 includes a number of linear actuators 114 and control ring 116. Duct inlet 112 includes a plurality of adjustably overlapping vanes 118 8 that are circumferentially arranged about central axis 120 of duct inlet 112. In the example of FIG. 5D, control ring 114 is arranged within cavity 112a of duct inlet 112 and surrounds the interior surface of duct 112 and vanes 118. Linear actuators 114 are connected to control ring 116 and generally distributed circumferentially around duct inlet 112. Examples of linear actuators 114 include solenoids, pneumatic cylinders, and linear electric motors.

Vanes 118 of inlet section 112 are formed from a resilient material, e.g. a resilient metal or an elastomer, or are otherwise biased into the larger contraction ratio second shape B as described above with reference to FIG. 2. Linear actuators 114 are triggered, e.g. by supplying pulse or stream of electricity or pressurized air to the actuators to displace control ring 116 axially along central axis 120 of duct inlet 112. As control ring 116 is displaced axially toward the leading edge 112b of inlet section 112, vanes 118 are constricted such that the overlapping relationship of the vanes increases to change the shape of inlet section 112 from, e.g., second shape B into first shape A as shown in FIG. 5E. Conversely, as linear actuators 114 are reversed to displace control ring 116 axially away from the leading edge of inlet section 112, vanes 118 expand back to change the shape of inlet section 112 back from first shape A to second shape B.

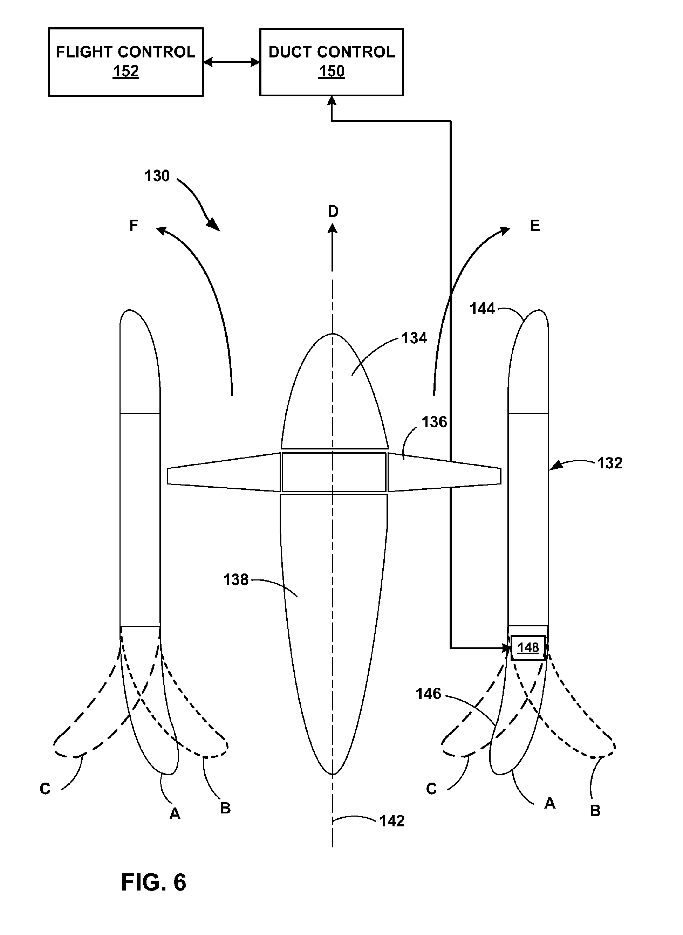

In addition to changing the shape of at least one of an inlet section and an outlet section of a duct of ducted fan as function of flight mode, examples disclosed herein may also include ducted fans with vectoring duct outlets. FIG. 6 is a schematic illustration of ducted fan 130 including morphing and vectoring duct 132. Ducted fan 13 also includes nose cone 134, rotor fan 136, and tail cone 138, which are arranged and function similar to nose cone 22, rotor fan 24, and tail cone 28 of ducted fan 12 described above with reference to FIG. 2. The components of ducted fan 130 are arranged about central axis 142, about which rotor fan 136 rotates during operation of the fan.

Duct 132 includes inlet section 144 arranged toward and including the leading edge of duct 132 and outlet section 146 arranged toward and including the trailing edge of duct 132. Each of inlet and outlet sections 144, 146 include annuli that are each configured to change shape as a function of the flight mode of the vehicle to which ducted fan 130 is connected, e.g. VTOL vehicle 10 of FIG. 1. Inlet and outlet sections 144, 146 of morphing and vectoring duct 132 may be triggered by, e.g., one or more actuators 148, which may be arranged, e.g., within a hollow space of one or both of the sections. Inlet and outlet sections 144, 146 of duct 132 may, e.g., change shape as a function of flight mode in a manner similar to that described with reference to morphing duct 20 of FIG. 2. However, in addition to changing shape as a function of flight mode, duct 132 also includes outlet section 146 capable of controllably vectoring ducted fan 130 to change the trajectory of the ducted fan during flight.

In the example of FIG. 6, the operation of actuators 148 is controlled by duct control 150, which can be similar to duct control 42 of FIG. 2. Duct control 150 receives input from a number of sources in order to properly control actuators 148 to change the shape of outlet section 146 to vector ducted fan 130 in different directions. In the example of FIG. 2, duct control 150 is communicatively connected to flight control 152 of, e.g., vehicle 10, which can be a part of the avionics payload. In this manner, duct control 150 may receive signals indicative of a desired direction of flight of vehicle 10 ordered by an operator via flight control 152.

FIG. 6 illustrates different shapes that outlet section 146 can acquire, whereby the different shapes vector ducted fan 130 in different directions. In FIG. 6, outlet section 146 is shown in first, second, and third shapes A, B, C. In operation, duct control 150 receives input from flight control 152 indicative of a direction of flight for ducted fan 130. In one example, duct control 150 receives flight direction signals from flight control 152 instructing duct control 150 to activate or otherwise trigger actuator 148 in outlet section 146. In particular, in this example, actuator 148 is triggered by duct control 150 to change the shape of outlet section 146 from shape A to shape B to turn ducted fan 130 from flight direction D to flight direction E.

Similarly, sometime thereafter or in another example, actuator 148 is triggered by duct control 150 based on flight direction signals from flight control 152 to change the shape of outlet section 146 from shape B back to shape A to turn ducted fan 130 from flight direction E back to flight direction D, or from shape B to shape C to turn ducted fan 130 from flight direction E to flight direction F. In a similar manner as described above with reference to FIGS. 2 and 5A-5E, actuator 148 may be one of a pneumatic, an electrical, a thermal, a magnetic, a mechanical, an electromechanical, a piezoelectric, or another appropriate actuator that is configured to be triggered to change the shape of outlet section 146 to vector ducted fan 130 in different directions during flight. In one example, actuator 148 may include a control ring similar to control ring 116 shown in FIG. 5D, which is, instead of moving forward and aftward as ring 116 of FIG. 5D, configured to move laterally relative to outlet section 146 to change the shape of the section in a manner consistent with the examples illustrated in FIG. 6.

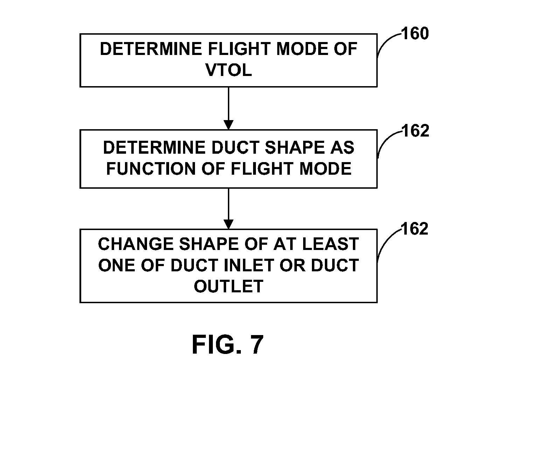

FIG. 7 is a flow chart illustrating an example method of operating a ducted fan including a morphing duct in different flight modes. The method of FIG. 7 includes determining a flight mode of a vehicle to which a ducted fan is operatively connected (160), determining a shape for at least one of an inlet section or an outlet section of a duct of the ducted fan as a function of the flight mode (162), and changing the at least one of the inlet section or the outlet section of the duct of the ducted fan to the determined shape (164). For clarity, the method of FIG. 7 will be described in the context of operation of ducted fan 12 of VTOL vehicle 10 illustrated in FIGS. 1, 2 and 5A-5E. However, the example method is equally applicable to other ducted fans with morphing and/or vectoring ducts in accordance with the examples disclosed herein.

In one example of the technique shown in FIG. 7, duct control 42 determines a flight mode of VTOL vehicle 10 to which ducted fan 12 is operatively connected (160). In one example, flight control 44 of, e.g., vehicle 10 and sensors 32 may generate signals indicative of the flight mode of vehicle 10 and the ambient conditions under which the vehicle is operating and duct control 42 determines the flight mode based on the signals generated by flight control 44 and/or sensors. For example, flight control 44 and/or sensors 32 may generate signals indicative of the attitude of vehicle 10 and ducted fan 12, which is indicative of the flight mode of the vehicle and ducted fan.

After determining the flight mode of vehicle 10, duct control 42 determines a shape for at least one of inlet section 36 or outlet section 38 of duct 20 of ducted fan 12 as a function of the flight mode of VTOL vehicle 10 (162). In one example, duct control 42 is communicatively connected to flight control 44 of, e.g., vehicle 10 and to sensors 32 to receive signals indicative of the flight mode of vehicle 10. Duct control 42 then determines a shape for inlet section 36 and outlet section 38 that is optimized to the flight mode determined based on the signals from flight control 44 and/or sensors 32. For example, duct control 42 compares signals received from flight control 44 and/or sensor 32 indicative of the flight mode of vehicle 10 to a look-up table, database, or other organized aggregation of data stored on a digital memory of the duct control to determine the shape for inlet section 36 and outlet section 38 associated with the indicated flight mode. In addition to or in lieu of associating duct shapes with flight modes in a look-up table on a memory of duct control 42, the states of actuators 40 may be associated in a look-up table on the memory of duct control 42 with the different flight modes of, e.g., VTOL vehicle 10.

After determining a shape of inlet and/or outlet sections 36, 38 as a function of flight mode of VTOL vehicle 10 (e.g., selecting a shape or actuator state stored in memory), duct control 42 changing the shape of inlet section 36 and/or outlet shape 38 (164), e.g., as illustrated in FIG. 2. In operation, duct control 42 receives input from flight control 44 and/or sensors 32 indicative of the flight mode of ducted fan 12. In one example, signals from flight control 44 and/or sensors 32 indicate that the attitude of ducted fan 12 indicates a hover flight mode, e.g., during a vertical take-off of the ducted fan. Based on the flight mode of ducted fan 12 determined based on the signals from flight control 44 and/or sensors 32, duct control 42 triggers actuators 40 to change the shape of inlet section 36 into shape B and outlet section 38 into shape D, as illustrated in FIG. 2.

After operating in hover flight mode for a vertical take-off, ducted fan 12 may transition to a cruise flight mode. In such examples, based on the flight mode of ducted fan 12 determined based on signals from flight control 44 and/or sensors 32, duct control 42 triggers actuators 40 to change the shape of inlet section 36 into shape A and outlet section 38 8 into shape C, as illustrated in FIG. 2.

Although the foregoing examples have referred to morphing and vectoring ducted fans that change shape symmetrically, e.g. about the longitudinal axis of the ducted fan, other examples includes morphing duct ducted fans that change shape asymmetrically relative to a longitudinal axis of the ducted fan. For example, different circumferential sectors of the inlet and/or outlet section of the duct may change shape independent of one another to form an asymmetrical shape about the longitudinal axis of the ducted fan. Asymmetrical morphing duct ducted fans may be effective in yielding better performance in particular flight conditions and modes including, e.g., in cross winds, during high angle of attack maneuvers, and during transition to and from hover to cruise flight modes.

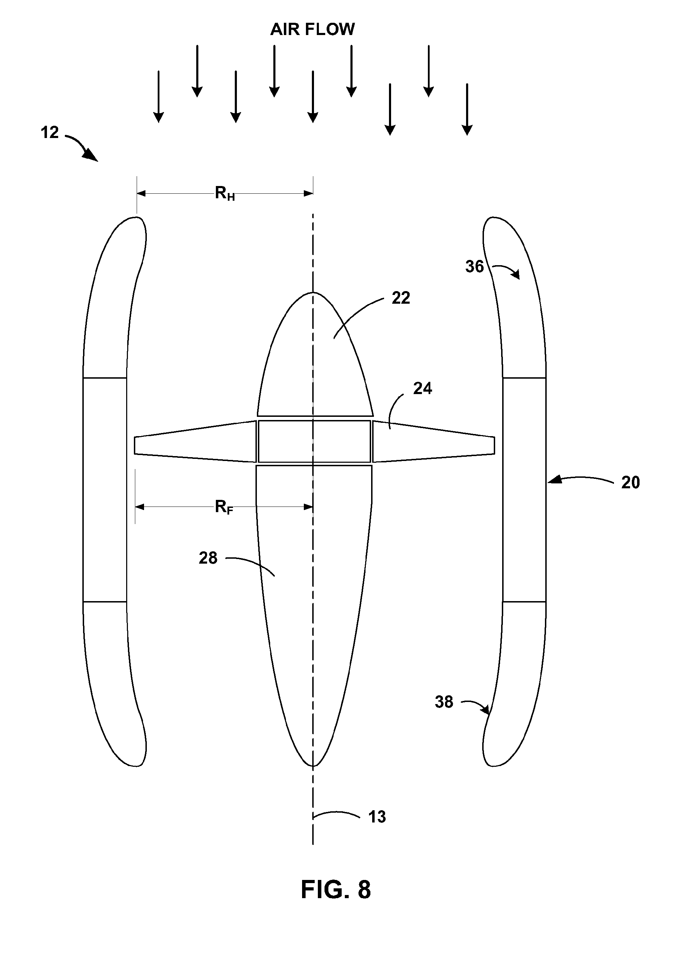

Additionally, morphing duct ducted fans in accordance with the examples disclosed herein may be configured to change an interior shape of the inlet section of the duct in a cruise flight mode to diffuse and recover the pressure head of the working medium gas entering the duct to decelerate the flow to keep the fan blade tips sub-sonic. Decelerating gas flow entering the duct effectively reduces the mach number of the fan blades relative to the incoming air flow, which, in turn, acts to increase gas flow uniformity and reduce total pressure losses. The foregoing effects may be achieved by, e.g., reducing the highlight radius, R_{H}, relative to the fan radius, R_{F}, to create a diverging inlet section as shown in FIG. 8.

The foregoing examples have several advantages including increasing the operating efficiency of ducted fans and vehicles employing such devices. In particular, ducted fans including morphing ducts as described herein are capable of changing the shape of the duct as a function of flight mode. In VTOL applications, such morphing duct ducted fans increase efficiency by reducing the required energy input per unit thrust generated for multiple flight modes, e.g. for a hover and a cruise flight mode. Additionally, the same or similar systems employed to change the shape of the duct as a function of flight mode in the disclosed example ducted fans, may be employed to change the shape of the outlet section of a duct in order to change a trajectory of the VTOL to which the ducted fan is connected, i.e. to vector the VTOL in different directions.

The techniques described in this disclosure, including those attributed to duct control 42 and flight control 44 may be implemented, at least in part, in hardware, software, firmware or any combination thereof. For example, various aspects of the techniques may be implemented within one or more processors, including one or more microprocessors, DSPs, ASICs, FPGAs, or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry.

Such hardware, software, firmware may be implemented within the same device or within separate devices to support the various operations and functions described in this disclosure. While the techniques described herein are primarily described as being performed by duct control 42 or flight control 44, any one or more parts of the techniques described herein may be implemented by a processor of an air vehicle including a ducted fan, such as VTOL vehicle 10.

In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components, or integrated within common or separate hardware or software components.

When implemented in software, the functionality ascribed to the systems, devices and techniques described in this disclosure may be embodied as instructions on a computer-readable medium such as RAM, ROM, NVRAM, EEPROM, FLASH memory, magnetic data storage media, optical data storage media, or the like. The instructions may be executed to support one or more aspects of the functionality described in this disclosure.

[0075] Various examples have been described. These and other examples are within the scope of the following claims.

## Claims

1. A ducted fan for a vertical take-off and landing (VTOL) vehicle, the ducted fan comprising:
a rotor fan; and
an annular duct surrounding the fan and comprising an inlet section on a first side of the fan and an outlet section on a second side of the fan opposing the first side,
wherein at least one of the inlet section or the outlet section is configured to actively change shape as a function of a mode of operation of the VTOL vehicle.

2. The ducted fan of claim 1, wherein the at least one of the inlet section or the outlet section is configured to actively change into a shape comprising at least one of a converging arcuate, a radius bell mouth, or an elliptical bell mouth shape as a function of a mode of operation of the VTOL vehicle.

3. The ducted fan of claim 1, further comprising:
a flight control module configured to generate an electric signal indicative of the mode of operation of the VTOL vehicle; and
a duct control module configured determine the mode of operation of the VTOL vehicle based on the electrical signal.

4. The ducted fan of claim 1, wherein the at least one of the inlet section or the outlet section is configured to change to a shape that changes a contraction ratio of the respective section as a function of the mode of operation of the VTOL vehicle, the contraction ratio being at least one of an area defined by a highlight radius of the inlet section divided by an area defined by a throat radius of the annular duct, or an area defined by an exit radius of the outlet section divided by the area defined by the throat radius.

5. The ducted fan of claim 1, further comprising:
an actuator connected to the at least one of the inlet section or the outlet section; and
a duct control module configured to trigger the actuator to change the shape of the at least one of the inlet section or the outlet section as a function of a mode of operation of the VTOL vehicle.

6. The ducted fan of claim 5, wherein the actuator comprises at least one of a pneumatic, an electrical, a thermal, a magnetic, a mechanical, a electromechanical, or a piezoelectric actuator.

7. The ducted fan of claim 5, wherein the at least one of the inlet section or the outlet section comprises a smart material and the actuator comprises one of an electrical, thermal, or magnetic actuator.

8. The ducted fan of claim 5, wherein the at least one of the inlet section or the outlet section comprises a plurality of overlapping vanes and the actuator comprises a ring surrounding the vanes, wherein the duct control module displaces the ring to change the section from a first shape to a second shape.

9. The ducted fan of claim 1, wherein the at least one of the inlet section or the outlet section is configured to actively change into an asymmetrical shape along a longitudinal axis of the annular duct as a function of a mode of operation of the VTOL vehicle.

10. The ducted fan of claim 1, wherein the outlet section is configured to change shape to change a trajectory of the ducted fan in at least one mode of operation of the VTOL vehicle.
